# EUROPEAN PATENT APPLICATION

(11) **EP 1 964 750 A1**
(43) Date of publication of application: **03.09.2008**
(21) Application number: 08158451.8
(22) Date of filing: 27.12.1999
(51) Int. Cl.: B62B 3/06

(54) **Control device for a tiller truck**

(30) Priority: 30.12.1998 SE 9804593
(62) Divisional of application: 99850213.2
(71) Applicant: Toyota Industries Sweden AB, 595 81 Mjölby (SE)
(72) Inventor: Eriksson, Lars, 590 19 Mantorp (SE); Stenberg, Kurt-Ove, 595 44 Mjölby (SE)
(74) Representative: Norberg, Charlotte

(57) **Abstract**

Arrangement at tiller truck, at which the communication between the handle and the truck itself is done via a serial connection, for instance a serial cable between a logic unit in the handle and a logic unit in the truck itself.

Furthermore the logic circuits for control of the functions of the truck are essentially gathered in the logic unit in the tiller handle.

## Description

Tiller trucks are today provided with more and more functions and possibilities, which in many cases mean additional controls arranged in the tiller handle. This means that an increasing number of cables run from the handle via the hinged and pivotable tiller to the truck itself. Since this is a comparatively long distance there is a risk that signals and pulses in one lead induce pulses in other leads, that may be sufficiently powerful to give faulty signals to the truck. This is of course not acceptable and the separate leads are therefor shielded or encapsulated in order partly to prevent internal influences and partly to prevent influence from other sources, as for instance from leads to motor and battery, that due to the large currents can result in powerful magnetic induction fields.

Shielded leads means in turn increased costs and the resulting thick cable is further more difficult to guide from the moveable arm to the truck itself, which may mean an increased risk of damages to the cable and partial function drop outs and security risks. I n view of the above problems the object of the invention is to eliminate the above drawbacks so that a safer and to a lower cost manufacturable truck is obtained.

The above object is solved by the use of digital serial communication between the handle and the truck itself. Preferably the digital communication is arranged in the shape of a serial cable. In order to handle the transfer digital circuits are arranged in the handle, for instance for the transfer of given control orders from the controls to signals that are then transferred to another digital unit in the truck itself that interpret the delivered digital signals and deliver corresponding commands to for instance thyristors and hydraulic valves.

At a first look the solution according to the invention seem to result in an unnecessarily increased complexity and probable increase in cost, in reality however it is an essential simplification and cost reduction.

The communication can preferably be by means of a cable but one can also consider wireless transfer via radio or optically, which in itself may provide additional supervising possibilities if so desired.

If one further as, is suggested in accordance with a further development of the inventive thought, locate the logic unit in the tiller handle and let it take care of other digital functions of the truck also additional advantages may be achieved. For instance means for authority verification may be located in the handle, and furthermore contact free sensors that are practically impossible to wear out may be used for the controls of the handle.

The arranging of logic circuits in the handle further allows an entirely digital speed control consisting of separate contact-free sensors instead of a potentiometer or the like. In this way the wear resistance and invariability during the time of use can be improved further, at the same time as the controls more optimally may be adapted to the digital logic.

The logic unit in the truck itself need only to have a communication function. The communication may further be bi-directional to allow sensors in the truck itself to send its information to the logic unit in the handle.

An additional advantage achieved with the locating of the logic in the handle is that the shocks and vibrations, including for circuit cards harmful microvibrations that are easily transferred to the truck from its comparatively small and hard wheels do not get the same possibility to reach the logic circuits.

The logic unit may further together with buttons and controls constitute a unit that is removable from the handle with a connection for the cable that connects the unit with the truck. Since this cable can be arranged inside a beam constituting the tiller it becomes comparatively well protected and since it is not a multiconductor cable it will be simpler to arrange.

For the shielding of the logic unit from sources of disturbances the handle may include a shielded space for the logic circuits.

In the cases when a display is desired this can be mounted more or less directly at the logic unit or even appended to this, that can be constituted of a separate unit in the shape of a circuit card.

Even a possible set of buttons or a keyboard for authority verification may be arranged in direct proximity at the logic unit or as a part thereof at for instance the bottom of the handle.

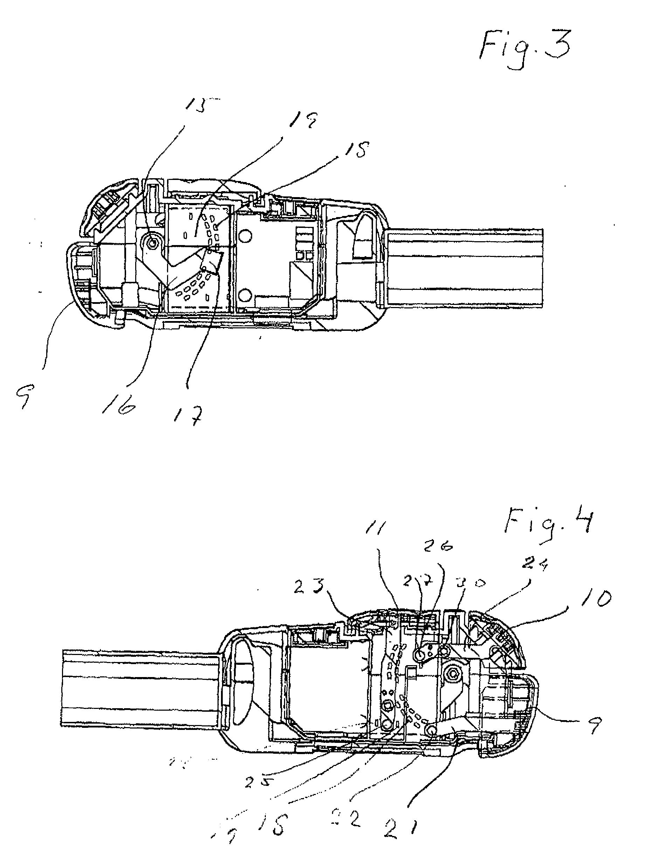

Additional advantages and characteristics of the invention are apparent from the following description of an embodiment shown in the enclosed drawings. In these fig. 1 shows a tiller truck in its entirety, fig 2 its handle seen from above, fig 3 and 4 vertical longitudinal sections through the handle and fig 5 one of the speed controls.

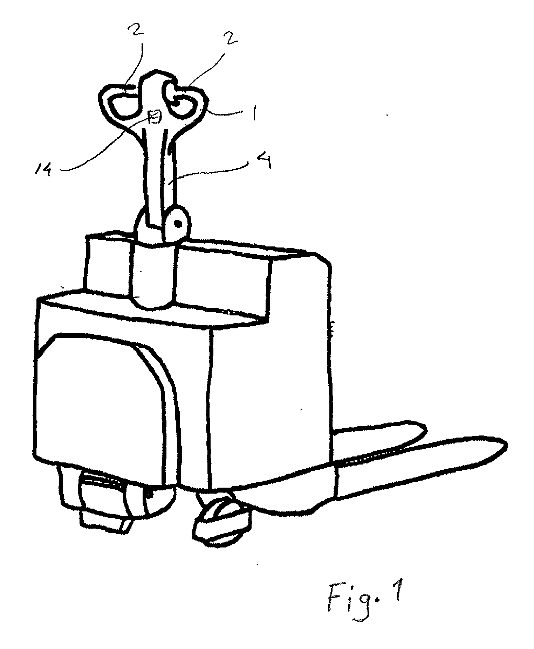

The tiller truck shown in fig 1 includes a drive and power unit from which the load forks project. In the drive and power unit the large batteries of the truck are arranged as well as a driving and steering wheel that is driven by a motor that is fed with electricity via a chopper that for instance provide currents in the shape of short pulses via tyristors. In the drive and power unit a hydraulic pump is provided with its electrically driven motor and hydraulic valves for the lifting movements. With the driving and steering wheel a tiller 4 is further connected, that is hinged height wise but pivotable together with the wheel in the drive and power unit for steering of the truck. In the outer end of the tiller a tiller handle is fastened and normally the operator leads the truck behind himself or steers it in front of himself.

The handle contains a supporting structure 1 provided with two grip handles 2 and is by means of bolts 3 fastened to the tiller 4 of the truck. On the frame 1 of the handle a control panel is fastened with four screws 6. The panel 5 is provided with drive controls 7 and 8 for left and right hand respectively for control of travel direction and speed by turning.

The control panel further includes a safety control or belly-button 9, a control 10 for lifting and lowering of the forks , a control 11 for lifting and lowering of the support legs and two buttons for the horn, one for the left and one for the right hand. On the top side the handle is further provided a display 13 and on the bottom side there is keyboard 14 for authority verification.

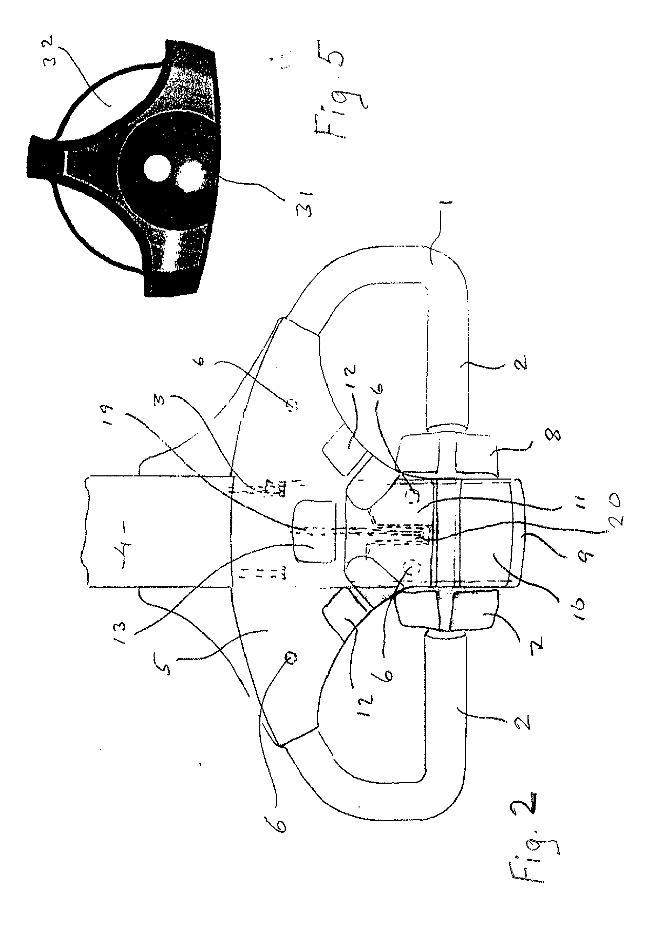

The drive controls 7 and 8 has the shape that is shown in fig 5 and differ from conventional drive controls by a downwards facing only slightly curved side 31. The operator can when he walks forwards with the truck following after him turn the palm of the hand upwards with the index finger in contact with the downwards facing only slightly curved side of the control, while the thumb may grip into the upper recess 32 turned towards the operator. In this way the ergonomics and the possibility of the operator to vary the manner in which the drive controls are actuated improve, so that the comfort is increased at the same time as the risk of wear damages is reduced.

The drive controls 8 and 7 for right and left hand respectively are connected to an axle 15 journaled in a lower bowl shaped part of the control panel 5. On the axle 15 an arm 16 is arranged provided with a magnet 17 in the outer end. At actuation of one of the drive controls 7 or 8 this magnet 17 is swung upwards or downwards from the neutral rest position dependent on desired direction of movement and speed respectively. The magnet that moves in a vertical plane at this sweeps along a curved double path of separate Hall sensors 18 arranged on a printed circuit 19. Via a serial cable the printed circuit card is in contact with the drive and power unit of the truck. The printed circuit card is in the proximity of the speed control arranged in a narrow vertical receiving space or slot 20 in the bottom part of the housing and is in this way well protected, while the magnet moves on the outside of the slit wall, the magnet or any of the other moveable parts can thus not harm the Hall sensors or the printed circuit card even at greater play. The magnet field however has no difficulty in reaching through the walls of the receptacle and influence the Hall-elements. The Hall elements 18 serve as sensors or switches and the further forward (towards the truck) arranged logic is programmed so that it via the serial cable and an electronically controlled chopper between battery and drive motor can control a successive increasing feed of more drive power at increased deflection of the drive control. The axle is further influenced by a spring device that when uninfluenced return the speed control to its 0-position, Since the Hall sensors 18 are arranged in double rows a large number of individual control levels are obtained (nine in each direction).

Through the used sensor technique the possibility is obtained to have many regulator steps at a low cost and it is easy to adapt the truck speed to the walking velocity of individual operators. In order to allow sufficient precision of the speed steps at low speed the steps are smaller at low speeds than those at the higher speeds, In order additionally to eliminate the feeling of jerkiness at the turning of the drive control the electronics is programmed to give a stepless increase, which is obtained by a successive and stepless increase to this value as the control is turned to the next step. By letting the rapidity in this successive and stepless increase be controlled by how swift the control movement is the sense of sluggishness that otherwise might be felt at increase is avoided. At a swift increase the ramping will be steep and no delay is felt and at a slow increase the ramping is slow so that the operator is not surprised by any sudden increase in velocity. This adaptive ramping may to its inclination be controlled by the time that passes between the activation of the different sensors at increase and decrease. Although this leads to a delay corresponding to the time between the reaction of these sensors this time is entirely negligible in relation to the slowness of the truck due to its weight.

As an alternative to the above use of Hall-elements for contact free control one can consider the use of photosensitive elements together with light guides or reflectors and light emitting diodes or some other light source.

The belly or security button has as its purpose to prevent the operator from being squeezed between the truck and a wall. Should this occur and the belly button is pushed in this is on an inwardly extending arm 21 provided with a magnet 22 that at this movement is moved so that it will influence one or several of the Hall elements that belong to the speed control, the magnet 22 however being located on the other side of the circuit card and its respective slot in relation to the magnet of the speed control. The magnet is as is apparent in level with the Hall-element that corresponds to the next fastest speed away from the operator, that is movement in the fork direction. The logic of the printed circuit card is at this programmed to activate an anti squeeze operation where the truck moves away from the operator until the button is released and has returned to its initial position.

The logic is further so programmed that if it detects a sensor fault that could mean that the sensor or sensors that are to react on a pushing of the belly-button might be non-functioning further use is blocked, or only allowed with limitations, as for instance that the truck can only be driven with a reduced speed and/or that the truck can not be driven towards the operator.

Also the controls located on top of the handle are provided with arms 23, 24 and magnets 25, 26 so that a tilting movement result in Hall-elements 27-30 being influenced initiating movements up and down for forks and support legs respectively.

For the above listed controls the use of Hall elements on the printed circuit card is particularly simple to arrange since the controls are located centrally in the handle in the same manner as the printed circuit card. If so desired one could consider also to arrange the signal controls with an extension and a magnet for a corresponding activation but in the shown case the signal controls are conventional electric contacts and connected by means of electric leads. Since the sensors belonging to the different movement controls are constituted by Hall elements sitting directly on the printed circuit card the possibility of electromagnetic pulses coming from the outside to interfere will become very small since the leads are short and centrally placed and also can be metal enclosed.

The slot or channel 20 receiving the printed circuit card 19 in the panel housing is narrow where the Hall sensors are situated to allow magnet influence for respective control but is widened in the end facing the truck. In this wider end the capsules containing the processors, memories etc are arranged, as well as the connections to the serial cable 31, keyboard and display.

The display 13 arranged on top of the control panel 5 is connected to the printed circuit card 19. The display is used at malfunction control and parameter setting without external means or additionally on the truck arranged means, but solely with the controls that the truck is normally provided with. In order to conduct an error control or parameter setting respectively one of the signal buttons is depressed at the same time as the truck is turned on via the authority verification described in more detail below alternatively with a key. This result in the logic of the truck entering into what we could call a check mode with all working functions inactive. An E is shown on the display corresponding to an Error log mode. A continued depressing result in the display of a P corresponding to parameter setting mode and a releasing of the signal button causes it to stay in the shown mode.

In the E-mode after a releasing of the signal button the latest error or malfunction that has been registered is displayed in the form of an error code alternating with the time (drive time) at which the error occurred. By means of the speed control one can then move back and forward in time with error codes and corresponding times being displayed. To get out of the error log mode the truck is turned off.

If by a somewhat longer depression of the signal button a P is shown on the display and the button is released at this the parameter setting mode has been entered and by actuation of the drive control corresponding to movement from or against the operator the display moves up or down in the list of parameters. When the parameter that is to be altered has been reached in this way the signal button is depressed resulting in the display of the parameter value, which can be altered up or down by means of the drive control. When the desired value has been reached this is confirmed by a depressing of the signal button, whereafter with the drive control the next parameter that is to be changed can be chosen. In order to exit the parameter setting mode the truck is turned off.

Examples of parameters etc that may be adjusted are allowed acceleration and retardation, height and load limitations, what one wants to receive warnings about, as battery voltage, load weight, height indication, if the indication is to be in kilograms, pounds, meters, feet etc.

The shift back from the error mode or parameter setting mode to drive mode is by turning the machine off. By not depressing any of the signal buttons at the starting the machine starts in drive mode with the possibly new parameter settings.

As is realized a possible change of the number of modes includes only changes in the electronics and a possible increase in the number of modes and check possibilities can thus be achieved with small costs, whether it is a question of further developments in production or refurnishing of a truck.

On the bottom side of the handle a keyboard is arranged for authority verification and starting and turning off of the truck instead of by means of a key. The keyboard is connected to the printed circuit card and arranged on the bottom of the housing of the control panel bottom part. The chassis of the handle is here provided with a corresponding recess so that the keys can be actuated. In this way the keyboard will at the same time be recessed and well protected by the sturdy chassis. The key board includes figure keys and a green key for start and a red key for stopping. If one wishes to enter Error log Mode, parameter setting mode or some other mode where the truck is inactivated one of the signal buttons is depressed at the same time as the green button is depressed or after entered authority verification code. The signal buttons are easy to reach even with the handle turned upward since they are located on the side of the control panel.

The keys of the keyboard may be provided with light emitting diodes that are lit when they have been depressed so that a receipt is obtained for the depressing, alternatively a row of light emitting diodes may be used as confirmation. The keys may be so called touch-keys or membrane keys.

The invention is not limited to the above embodiment but may be varied within the frame of the inventive thought.

Arrangement at a tiller truck, characterized in that the communication between a handle of the tiller and the truck in itself takes place via a serial connection, for instance a serial cable between a logic unit in the handle and a logic unit in the truck itself.

Arrangement according to the above arrangement, characterized in that the arrangement is such that the communication is bi-directional.

Arrangement at a tiller truck in accordance said first arrangement and of the type that includes logic circuits for the control of one or several of the functions of the truck, characterized in that the logic circuits for the truck are gathered in the logic unit arranged in the tiller handle.

Arrangement according to said first and second arrangement characterized in that the logic unit in the handle together with one or several controls and or keys are united to a control panel (5) removable from the handle.

Arrangement according to any of the preceding arrangements, characterized in that one or several of the controls (7,8, 9, 10, 11) cooperate with contact-free sensors (18, 27-29, 30) for instance capacitive, optical, inductive or magnet field sensors arranged on a circuit card (19) including logic circuits.

Arrangement according to last mentioned arrangement, characterized in the sensors of the controls including Hall-sensors influenceable by magnets (17, 22, 25, 26) connected to the moveable manoeuvering parts of the controls.

Arrangement according to last mentioned and second last mentioned arrangement characterized in that one or several rows of sensors (18) are arranged successively to be activated by the manoeuvering part of a speed control (7, 8) and that the logic unit is programmed to control the drive with respect to direction and speed dependent on the signals from the sensors.

Arrangement according to last arrangement characterized in that a safety control (9) is arranged on the handle and that the logic is programmed to activate a driving away from the operator at depression, to prevent him from being squeezed against a wall or the like, the safety control being provided with means to influence one or several of the sensors (18) of the drive control (7, 8), for instance corresponding to movement away from the operator and that the logic further is programmed to detect the depression of the safety control (9) and that the logic further is programmed to supervise the function of the sensor or sensors that are used by the safety control via the use of the drive control and to activate suitable measures at a malfunction.

Arrangement according to second last arrangement characterized in that the logic unit is programmed to inactivate drive and instead activate a diagnose or setting program if the truck is turned on with a simultaneously depressed signal control (12), and that influence of signal control (12) and drive control (7, 8) respectively is used for browsing and/setting together with a display (13), preferably arranged on the top side of the handle,

Arrangement according to any of the arrangements above, characterized in that a key board (14) is arranged in the proximity of the logic unit, in particular on the bottom side of the handle, for instance for authority verification.

## Claims

1. Arrangement at a tiller truck, **characterized in that** the communication between a handle of the tiller and the truck in itself takes place via a serial connection between a logic unit in the handle and a logic unit in the truck itself, and that the logic unit in the handle is the superior logic unit of the truck and remaining logic units in the truck are arranged to interpret digital signals from the logic unit of the handle.

2. Arrangement at a tiller truck according to claim 1, **characterized in that** the logic units in the truck itself only has a communication function.

3. Arrangement according to claims 1-2, **characterized in that** the arrangement is such that the communication is bi-directional.

4. Arrangement at a tiller truck according to any of the claims 1-3, **characterized in that** the logic unit in the handle is programmable.

5. Arrangement at a tiller truck according to claim 4 **characterized in that** the programmable functions comprises, allowed acceleration or retardation, height or load limitations, what one wants to receive warnings about, as battery voltage, load weight, height indication, and/or if said indication is to be in kilograms, pounds, meters, feet, etc.

6. Arrangement according to claim 4 or 5 **characterized in that** the logic unit is programmed to inactivate drive and instead activate a diagnose or setting program if the truck is turned on with a simultaneously depressed signal control (12), and that influence of signal control (12) and drive control (7, 8) respectively is used for browsing and/setting together with a display (13), preferably arranged on the top side of the handle.

7. Arrangement at a tiller truck according to claims 1 -6, **characterized in that** the logic circuits of the handle are arranged on a printed circuit card (19),

8. Arrangement according to claim 4 , **characterized in that** one or several of the controls (7, 8, 9, 10, 11) cooperate with contact-free sensors (18, 27-29, 30) for instance capacitive, optical, inductive or magnet field sensors arranged on said circuit card (19) including logic circuits.

9. Arrangement according to claim 5, **characterized in** the sensors of the controls including Hall-sensors influenceable by magnets (17, 22, 25, 26) connected to the moveable manoeuvering parts of the controls.

10. Arrangement according to claim 7 or 8, **characterized in that** one or several rows of sensors (18) are arranged successively to be activated by the manoeuvering part of a speed control (7, 8) and that the logic unit is programmed to control the drive with respect to direction and speed dependent on the signals from the sensors.

11. Arrangement according any of the claims above, **characterized in that** a safety control (9) is arranged on the handle and that the logic is programmed to activate a driving away from the operator at depression, to prevent him from being squeezed against a wall or the like, the safety control being provided with means to influence one or several of the sensors (18) of the drive control (7, 8), for instance corresponding to movement away from the operator and that the logic further is programmed to detect the depression of the safety control (9) and that the logic further is programmed to supervise the function of the sensor or sensors that are used by the safety control via the use of the drive control and to activate suitable measures at a malfunction.

12. Arrangement according to any of the claims 1 -11, **characterized in that** the logic unit in the handle together with one or several controls and or keys are united to a control panel (5) removable from the handle.

13. Arrangement according to any of the preceding claims, **characterized in that** a key board (14) is arranged in the proximity of the logic unit, in particular on the bottom side of the handle, for instance for authority verification.
